Europäisches Patentamt

European Patent Office

Office européen des brevets

(11) Publication number: **0 684 736 A2**

# EUROPEAN PATENT APPLICATION

(21) Application number: **95303303.2**

(51) Int. Cl.6: **H04N 7/26**

(22) Date of filing: **17.05.95**

(30) Priority: **27.05.94 US 250251**

(43) Date of publication of application:
**29.11.95 Bulletin 95/48**

(84) Designated Contracting States:
**DE FR GB IT**

(71) Applicant: **AT&T Corp.**
**32 Avenue of the Americas**
**New York, NY 10013-2412 (US)**

(72) Inventor: **Eleftheriadis, Alexandros**
**100 Morningside Drive,**
**Apt. 4-E**
**New York,**
**New York 10027 (US)**
Inventor: **Jacquin, Arnaud Eric**
**33 Bank Street,**
**Apt. 21**
**New York,**
**New York 10014 (US)**

(74) Representative: **Buckley, Christopher Simon**
**Thirsk et al**
**AT&T (UK) LTD.,**
**AT&T Intellectual Property Division,**
**5 Mornington Road**
**Woodford Green,**
**Essex IG8 0TU (GB)**

(54) **Model-assisted coding of video sequences at low bit rates.**

(57) In a method of coding a video signal for low bit rate coding applications such as video teleconferencing or telephony, an encoder comprises an automatic face location detection method which models face contours as ellipses and transmits the face location model parameters to the decoder. This face location information may be exploited with use of at least two techniques, each in accordance with another illustrative embodiment of the present invention. In one technique, referred to herein as "model-assisted dynamic bit allocation," a three-dimensional subband-based coding method is enhanced by providing two quantizers per subband -- a fine quantizer which is used to code pixel data inside the detected face location model, and a coarse quantizer which is used to code pixel data outside this region. Thus, the coding quality inside the facial regions is improved relative to the coding quality of the remainder of the image. In another technique, referred to herein as "model-assisted motion compensation," a motion-compensated coding method is enhanced by automatically computing motion vectors for pixels inside the face region based on the relative positions of detected facial models in successive frames. No motion information needs to be explicitly transmitted to the decoder, since the motion vector may be recomputed at the decoder.

FIG. 1

EP 0 684 736 A2

### Field of the Invention

The present invention relates generally to the field of video signal coding and more particularly to the coding of video signals for use in video communications at low bit rates.

### Background of the Invention

The coding of video signals for efficient transmission and/or storage has received a great deal of recent attention, particularly with the growing interest in technologies such as HDTV (High Definition Television) and Interactive Television (e.g., "video-on- demand"). In fact, video coding algorithms have been standardized for many of these applications (e.g., Motion Picture Experts Group standards such as MPEG-1 and MPEG-2). These applications, however, typically involve the coding of video signals at relatively high bit rates.

At low bit rates, such as are used in video teleconferencing and video telephony applications, coding artifacts are often present throughout the coded images. These artifacts result from the fact that having a low number of bits available to code each frame reduces the quality of the coding that can be performed. Typically, the artifacts tend to affect various areas of the image without discrimination. Viewers, however, tend to find coding artifacts to be much more noticeable in areas of particular interest to them. In typical video teleconferencing or telephony applications, for example, the viewer will tend to focus his or her attention to the face(s) of the person(s) on the screen, rather than to other areas such as clothing and background. Moreover, even though fast motion in a coded image is known to mask coding artifacts, the human visual system has the ability to "lock on" and "track" particular moving objects in a scene, such a a person's face. For the above reasons, communication between users of very low bit rate video teleconferencing and telephony systems tend to be more intelligible and psychologically pleasing to the viewers when facial features are not plagued with too many coding artifacts.

### Summary of the Invention

The present invention recognizes the fact that in video teleconferencing and telephony applications, for example, the coding quality of certain regions of a video image (e.g., those containing a predetermined object such as a person's face) is significantly more important than the coding quality of other areas of the scene. In accordance with one illustrative embodiment of the present invention, a region of an image which includes a predetermined object (e.g., a face) is automatically determined by comparing one or more predetermined (geometric) shapes (e.g., ellipses of various dimensionality) with the shapes of objects found in the image. Thus, the predetermined object is "modelled" by a set of one or more geometric shapes. When a good "match" is found, it is presumed that the object in the image is, in fact, the predetermined object. The determined region, presumed to include the predetermined object, is then coded with, for example, a higher quality coder than might be used for coding other areas of the image.

In accordance with one illustrative embodiment, an encoder detects the presence and tracks the movement of faces in the sequence of video images, and then uses this information to discriminate between the coding of different area in typical "head-and-shoulders" video sequences. For example, the encoder may advantageously encode facial features (i.e., the portion of the image determined to be within the region which includes the face) very accurately, while encoding the rest of the picture less accurately. In this manner, the encoder performs what is referred to herein as "model-assisted coding."

In one illustrative embodiment of the present invention, an encoder comprises an automatic face location detection method which models face contours as ellipses and transmits the face location model parameters to the decoder. This face location information may be exploited with use of at least two techniques, each in accordance with another illustrative embodiment of the present invention. In one technique, referred to herein as "model-assisted dynamic bit allocation," a three-dimensional subband-based coding method is enhanced by providing two quantizers per subband -- a fine quantizer which is used to code pixel data inside the detected face location model, and a course quantizer which is used to code pixel data outside this region. Thus, the coding quality inside the facial regions is improved relative to the coding quality of the remainder of the image. In another technique, referred to herein as "model-assisted motion compensation," a motion-compensated coding method is enhanced by automatically computing motion vectors for pixels inside the face region based on the relative positions of detected facial models in successive frames. With model-assisted motion compensation, no motion information needs to be explicitly transmitted to the decoder, since the motion vector may be recomputed at the decoder.

## Brief Description of the Drawings

Fig. 1 shows a block diagram of a video coder employing model-assisted dynamic bit allocation in accordance with a first embodiment of the present invention.

Fig. 2 illustrates the technique of model-assisted motion compensation in accordance with a second embodiment of the present invention.

## Detailed Description

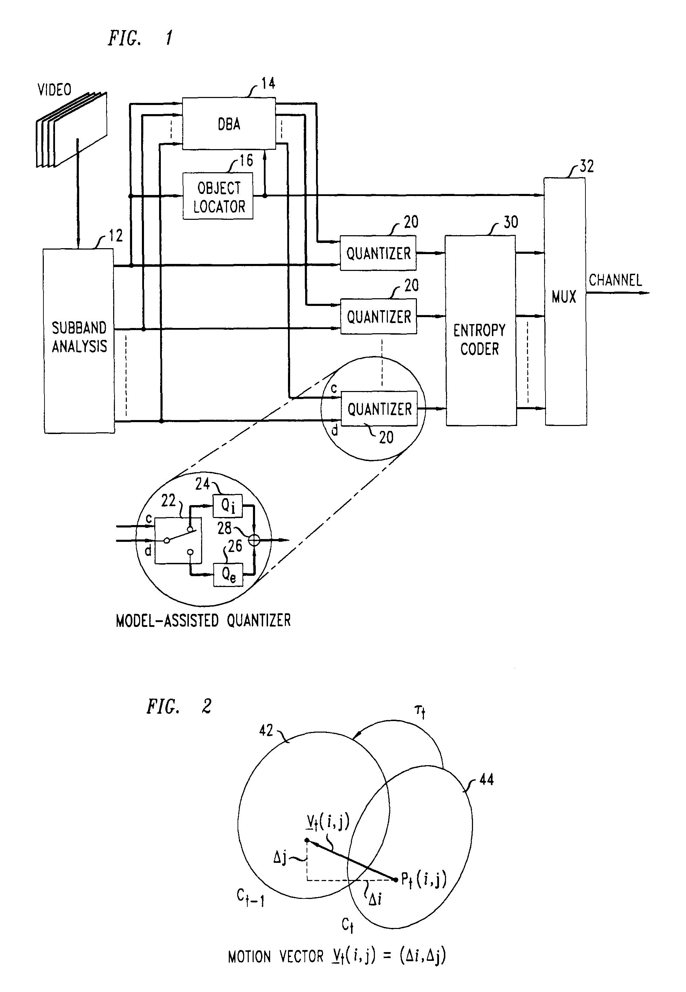

Fig. 1 shows a block diagram of a video coder employing model-assisted dynamic bit allocation in accordance with a first embodiment of the present invention. The illustrative system employs a three-dimensional (i.e., spatio-temporal) subband video coding technique. Such techniques are well known in the art and are described, for example, in N. S. Jayant and P. Noll, Digital Coding of Waveforms: Principals and Applications to Speech and Video (1984). A three-dimensional subband video coding technique with dynamic allocation of bits amongst the various subbands is described in U.S. Patent No. 5,309,232, issued on May 3, 1994, to J. Hartung et al., and assigned to the assignee of the present invention. U.S. Patent No. 5,309,232 is hereby incorporated by reference as if fully set forth herein.

In the system of Fig. 1, a video input signal is provided to subband analysis 12, which filters the input signal into a plurality of individual spatio-temporal subband signals. Each of these subband signals is individually quantized (i.e., coded) by quantizers 20. Quantizers for use in video coding are described in detail in the Jayant and Noll reference. Various quantization techniques may be used including the technique known as "geometric vector quantization" as described in U.S. Patent No. 5,136,374, issued on August 4, 1992, to N. Jayant et al., and assigned to the assignee of the present invention. U.S. Patent No. 5,136,374 is hereby incorporated by reference as if fully set forth herein. The coded (i.e., quantized) signals of the system of Fig. 1 are entropy coded by entropy coder 30, and multiplexor 32 combines these coded signals into a single coded signal for transmission across a communications channel. Subband analysis 12, entropy coder 30 and multiplexor 32 are conventional.

In accordance with the present invention, one or more of the individual subband signals may also be provided to object locator 16. In the illustrative system of Fig. 1, only the "first" subband (which may, for example, be the low-pass spatio-temporal subband) is provided to object locator 16. Object locator 16 automatically determines the location of faces in the image to be coded by geometrically modelling the outline of a face location as an ellipse. Thus, the face location problem reduces to an ellipse "fitting" problem.

Specifically, object locator 16 of the illustrative system of Fig. 1 first generates a binary thresholded difference image obtained by subtracting consecutive low-pass spatio-temporal subband images. This produces an image which represents the edges of objects contained in the original video image, albeit at a low resolution. This binary edge image corresponding to the low-pass spatio-temporal subband is then scanned to locate the edges of objects in the image and to determine advantageous locations at which to position the top of an ellipse for matching with the image. Ellipses of various sizes -- that is, various lengths and aspect ratios (width divided by height) -- are positioned at the determined locations and compared with the binary edge image to find the best match. This best match determines the region of the image which is identified as a person's head. In certain embodiments, the ellipses may be positioned at various angles in over to provide improved matching with heads which are tilted. See the Appendix herein for further details on an automatic face location detection method of object locator 16 in accordance with one illustrative embodiment of the present invention.

Dynamic bit allocator (DBA) 14, using the knowledge of the location of faces in the image as provided by object locator 16 and the knowledge of the number of bits which are available to code a given frame, provides a control input (labelled as "c" in Fig. 1) to one or more of quantizers 20. In particular, some or all of the quantizers are provided with alternative quantization level capability (e.g., fine quantization versus coarse quantization). In the illustrative system of Fig. 1, for example, all of the quantizers are provided with this capability. These quantizers 20 comprise switch 22 which, responsive to control input "c," determine whether the portion of the image being currently coded (labelled as "d" in Fig. 1) should be coded with fine quantizer ($Q_i$) 24 or with course quantizer ($Q_e$) 26. Thus, fine quantizer 24 will be advantageously selected for regions which include a person's face and course quantizer 26 will be selected for the remainder of the image. Combiner 28 combines the signals from fine quantizer 24 and course quantizer 26 (although only one will be operable at a time). See the Appendix herein for further details on a video coder employing model-assisted dynamic bit allocation in accordance with one illustrative embodiment of the present invention.

Fig. 2 illustrates the technique of model-assisted motion compensation in accordance with a second embodiment of the present invention. The use of motion compensation in video coding is well known in the art and is incorporated in a number of standardized video coding methods such as, for example, Motion Picture Experts Groups standards including MPEG -1 and MPEG-2. Motion compensation is described, for example, in U.S. Patent No. 4,245,248 issued on January 13, 1981, to A. Netravali et al., and in U.S. Patent No. 4,218,704 issued on August 19, 1980, to A. Netravali et al., each of which is assigned to the assignee of the present invention. U.S. Patent No. 4,245,248 and U.S. Patent No. 4,218,704 are each hereby incorporated by reference as if fully set forth herein.

Specifically, Fig. 2 shows two elliptical regions which have been identified as including faces in the images of two successive frames in accordance with the face location technique of the present invention as described above and in the Appendix herein. Region 42 (labelled $C_{t-1}$ in the figure) includes a located face in the image of a first frame (i.e., at time t-1) and region 44 (labelled Ct in the figure) includes a corresponding located face in the image of a second frame (i.e., at time t). A two-dimensional affine transformation ($\tau_t$) is defined by mapping the major and minor axes of the ellipse $C_t$ to the ellipse $C_{t-1}$. Then, the motion vector for any point, $P_t$ (i , j), inside region 44 (ellipse $C_t$) can be computed based on the transformation $\tau_t$, as shown in the figure and described in detail in the Appendix included herein. The computation as described will be familiar to one of ordinary skill in the art. Note that the above-described technique does not require that motion information be explicitly transmitted to a decoder. Rather, if the face location information is transmitted for each coded frame, the decoder can itself determine the transformation $\tau_t$ and compute the motion vectors for each pixel based thereon.

Although quantizers 20 of the system of Fig. 1 are shown as including two distinct coders (i.e., fine quantizer 24 and course quantizer 26), these coders may be structurally identical and differ only in, for example, one or more parameters supplied thereto. In an alternative embodiment, only one (physical) coder may be used' where the coder is supplied with an appropriate parameter or parameters, depending on whether the coding of the determined region (e.g., the region which includes the person's face) is being performed or not.

Although a number of specific embodiments of this invention have been shown and described herein, it is to be understood that these embodiments are merely illustrative of the many possible specific arrangements which can be devised in application of the principles of the invention. Numerous and varied other arrangements can be devised in accordance with these principles by those of ordinary skill in the art without departing from the spirit and scope of the invention.

**References**

[1] K. Aizawa, H. Harashima, T. Saito, "Model-based analysis synthesis image coding (MBASIC) system for a person's face," *Signal Processing: Image Communication*, vol. 1, no. 2, pp. 139-152, October 1989.

[2] K. Aizawa, C.S. Choi, H. Harashima, T.S. Huang, "Human facial motion analysis and synthesis with applications to model-based coding," *Motion analysis and image sequence processing*, Chapter 11, Kluwer Academic Publishers, 1993.

[3] J. S. Angiolillo, H. E. Blanchard, E. W. Israelski, "Video Telephony," *AT&T Technical Journal*, vol. 72, no. 3, May/June 1993.

[4] R. Aravind, G. L. Cash, D. L. Duttweiler, H-M. Hang, B. G. Haskell, A. Puri, "Image and video coding standards," *AT&T Technical Journal*, vol. 72, no. 1, January/February 1993.

[5] M. Buck, N. Diehl, "Model-based image sequence coding," *Motion analysis and image sequence processing*, Chapter 10, Kluwer Academic Publishers, 1993.

[6] *Automatic object recognition*, Edited by Hatem Nasr, SPIE Milestone Series, vol. MS 41, 1991.

[7] R. C. Beach, "An Introduction to the Curves and Surfaces of Computer-Aided Design," Van Nostrand Reinhold, New York, 1991.

[8] C.S. Choi, H. Harashima, and T. Takebe, "Analysis and synthesis of facial expressions in knowledge-based coding of facial image sequences," *Proc. ICASSP '91*, 1991.

[9] I. Craw, H. Ellis, J.R. Lishman, "Automatic extraction of face features," *Pattern Recognition Letters*, vol. 5, no. 2, February 1987.

[10] N. Diehl, "Object-oriented motion estimation and segmentation in image sequences," *Signal Processing*, vol. 3, no. 1, pp. 23-56, February 1991.

[11] "Draft revision of recommendation H.261: video codec for audiovisual services at $p \times 64$ kbit/s," *Signal Processing: Image Communication*, vol. 2, no. 2, pp. 221-239, August 1990.

[12] G. Farin, "Curves and Surfaces for Computer-Aided Geometric Design,", Academic Press, 1993.

[13] M.A. Fischler, R.A. Elschlager, "The representation and matching of pictorial structures," *IEEE Trans. on Computers*, January 1973.

[14] R. Forchheimer, T. Kronander, "Image Coding-From Waveforms to Animation," *IEEE Trans. on Acoustics, Speech, and Signal Processing*, vol. 37, no. 12, pp. 2008-2023, December 1989.

[15] D.C. Gibbon, J. Segen, "Detecting people in image sequences for electronic camera panning applications," AT&T Technical Memorandum no. 11352-930201-03TM, February 1993.

[16] D.C. Gibbon, R.V. Kollarits, "Electronic camera panning on the machine vision testbed," AT&T Technical Memorandum no. 113520-930301-06TM, March 1993.

[17] V. Govindaraju, D.B. Sher, S.N. Srihari, "Locating human faces in newspaper photographs," *Proc. IEEE Computer Society Conference on Computer Vision and Pattern Recognition*, June 1989.

[18] V. Govindaraju, S.N. Srihari, D.B. Sher, "A computational model for face location," *Proc. Third International Conference on Computer Vision*, December 1990.

[19] M. Hötter, R. Thoma, "Image segmentation based on object oriented mapping parameter estimation," *Signal Processing*, vol. 15, no. 3, pp. 315-334, October 1988.

[20] A. Jacquin, C. Podilchuk, "New geometric vector quantizers for high-pass video subbands," AT&T Technical Memorandum no. 11224-920131-03TM, January 1992.

[21] A. Jacquin, C. Podilchuk, "Very low bit rate 3D subband based video coding with a dynanic bit allocation," *Proc. International Symposium on Fiber Optic Networks and Video Communications*, April 1993.

[22] A. Jacquin, C. Podilchuk, "Very low bit rate 3D subband based video coding with a dynanic bit allocation," AT&T Technical Memorandum no. 11224-930720-05TM, July 1993.

[23] M. Kunt, A. Ikonomopoulos, M. Kocher, "Second-generation image coding techniques," *Proc. IEEE*, vol. 73, no. 4, pp. 549-574, April 1985.

[24] M. Liou, "Overview of the px64 kbit/s Video Coding Standard", *Communications of the ACM*, vol. 34, no. 4, April 1991.

[25] MPEG-4 Seminar organized by Dimitri Anastasiou, Columbia University, New York, NY, July 1993.

[26] H.G. Musmann, M. Hötter, J. Ostermann, "Object-oriented analysis-synthesis coding of moving images," *Signal Processing: Image Communication*, vol. 1, no. 2, pp. 117-138, October 1989.

[27] Y. Nakaya, Y.C. Chuah, and H. Harashima, "Model-based/waveform hybrid coding for videotelephone images," *Proc. ICASSP '91*, 1991.

[28] Y. Nakaya, H. Harashima, "Model-based/waveform hybrid coding for low-rate transmission of facial images," *IEICE Trans. on Communications*, vol. E75-B, no. 5, May 1992.

[29] T. Pavlidis, *Structural pattern recognition*, Springer-Verlag, 1977.

[30] Workshop on very low bit rate video compression, Co-Organizers: T. Huang, M. Orchard, University of Illinois at Urbana-Champaign, May 1, 1993.

# Appendix

# 1 Introduction

In low bit rate video teleconferencing situations, coding artifacts are systematically present throughout coded images. These artifacts tend to affect various areas of the image without discrimination. However, viewers tend to find coding artifacts to be much more noticeable in areas of particular interest to them. In particular, a user of a video teleconferencing system/video telephone will typically focus his attention to the *face(s)* of the person(s) on the screen, rather than to other areas such as clothing, background, etc. In fact, although fast motion is known to mask coding artifacts, the human visual system has the ability to *lock on* and *track* particular moving objects, such as a person's face. Communication between users of very low bit rate video teleconferencing systems or video phones will be intelligible and psychologically pleasing to the viewers only when facial features are not plagued with too many coding artifacts[1]. A recent document about the impact of video telephony [3] stresses the importance of *nonverbal information* carried by the visual channel in a voice–plus–video communication system. The authors identify the three most important sources of nonverbal messaging to be:

"our eyes and faces, our hands, and our appearance,"

in that order.

The motivation of this work was to investigate the possibility to detect and track specific moving objects known *a priori* to be present in a video sequence, and to enable a video coding system to use this information in order to discriminatively encode different areas in typical "head–and–shoulder" video sequences. The coder would, for example:

- Encode facial features such as: eyes, mouth, nose, etc. very accurately.

- Encode less accurately the rest of the picture, be it moving or still.

---

[1]In some situations, a very good rendition of facial features is paramount to intelligibility. The case of hearing–impaired viewers who would mostly rely on lip reading is one such example.

6

This requires that the encoder first detects and models face locations, then exploits this information to achieve *model-assisted coding*. The location detection algorithm should be of fairly low complexity, while the overhead bit rate required for the transmission of the model parameters should be minimized.

In this work, we show how to exploit and integrate in a novel way techniques derived from *computer vision* (scene analysis, geometric modeling, object recognition) for low bit rate 3D subband-based coding of video. The coding system used functions at 128 kbps, with an input digital color video signal in YUV format, and with a coding rate of 96 kbps for the luminance signal. The video data consists of "head-and-shoulder" sequences, with one or two persons in the image frame. We describe an automatic face location detection and tracking algorithm which models face contours as ellipses and transmits the face location model parameters to the decoder. We also describe two ways to exploit the face location information through *model-assisted motion compensation*, and *model-assisted dynamic bit allocation*. In the former technique, a motion vector field for pixels inside the face region is *automatically* computed from the relative positions of facial models in successive frames. No motion information has to be transmitted since the motion vector field is (easily) recomputed at the decoder. The latter technique uses two quantizers per subband: a fine one used for data inside the face location model, and a coarse one used for data outside this region.

In order to have a benchmark with which to compare the performance of the automatic face location detection algorithm, and to assess the effectiveness of model-assisted motion compensation and model-assisted dynamic bit allocation, we also obtained results for "hand-drawn" face location information. The latter was generated by manually fitting ellipses on the original sequences using appropriate interactive software that was developed for this purpose.

Even though the work reported here focuses on 3D subband based video coding algorithms, face location information can be used for similar discriminative quantization strategies in other video coding algorithms. In particular, and if one dispenses with the model-assisted motion compensation scheme which requires transmission of model parameters to the decoder. any coding scheme that allows selection of quantization parameters at a fine scale can be accomodated with full decoder compatibility (e.g. MPEG [4], H.261 [24, 11], in which quantizers are selectable down to the macroblock level).

The organization of this appendix is the following. In Section 2, we briefly review the concept of model-based video coding, and define our model-assisted coding approach with respect to it. In Section 3, we describe the model adopted for the representation of face information, a computer-assisted hand-drawing procedure, and the integration of face location information to a low bit rate 3D subband-based video coding system. In Section 4, we describe the automatic face location detection and tracking algorithm, and illustrate the quality improvement in image sequences coded with a model-assisted coder.

# 2  Model-based and model-assisted video coding

It is widely agreed upon that "classical" (i.e. purely waveform-based) coding techniques alone may not be sufficient for high-quality coding of digital signals at very low bit rates—e.g. 128 kbps and below for a color video signal [30, 25]. Thus, *model-based* approaches to very low bit rate coding of video, also referred to as *knowledge-based coding, semantic coding*, or *analysis-synthesis coding*, have been receiving a great deal of attention [23, 14, 5, 1, 2, 27, 28, 8, 19, 26, 10]. For a detailed overview of state-of-the-art model-based video coding techniques, the reader is referred to [5, 2].

The principle of a generic model-based coding system is illustrated in **Figure 1**. Each input video frame to the encoder is analyzed, and a geometric model of the data is constructed—this model being either fitted[2] to the data [1, 28], or obtained from segmentation of the input image into *objects* represented by models of the "contour-texture" type [19, 26, 10]. The parameters of the model are transmitted on the channel along with an appropriately coded error signal. The latter is necessary in order to mitigate quality loss in regions in the image—typically complex, highly detailed ones—where the model does not give a sufficiently good fit, or simply "fails."

---

[2]The automatic fitting (i.e. not involving any human interaction) of models—such as the wireframe models of Harashima *et al.* [1, 28], in real-time, to video data is far from being a solved problem.

The signal is reconstructed (synthesized) at the receiving end from the model parameters and the decoded error signal. Since the bit rate required to transmit the model parameters is extremely low, very low coding rates can be achieved for very specific scenes, usually fairly low in "texture" and "motion content." This approach, however, apart from its inherently very high complexity, also suffers from a lack of flexibility: the models are usually tailored to a specific sequence content. Whenever the input video data differs substantially from what can be modeled by the encoder, a model breakdown will occur with serious consequences for the coded signal.

Rather than relying on ubiquitous data models for head–and–shoulder video sequences, our approach has been to only *partially model* the data, i.e. model the *location* of specific objects known *a priori* to be present in the scene, and integrate this partial model to a "classical" video coding system. For the purposes of very low bit rate coding of video teleconferencing scenes, where typically one or more persons are shown from the waist up moving in front of a still background, we propose to model the locations of the faces[3] of the people present in the scene, rather than model the faces themselves.

This location model, which is obtained automatically and reliably, is used to *improve*, in an area–selective fashion, the image quality given by a classical video coder. In effect, the coder is assigned to transfer a relatively small fraction of the available bit rate from the coding of the non–facial area[4] to that of the facial area, thereby providing images with sharper facial features. Note that in cases where the *a priori* assumptions with respect to the source content are not satisfied (model breakdown), the classical video coder can be used as an efficient "fall–back" coding mode. We refer to this approach as *model–assisted* video coding, in order to distinguish it from *model–based* coding which relies more heavily on the data model. The benefits of our approach are at least that: i) it guarantees an acceptable lower bound in coding quality since it relies on a good fall–back mode, ii) it preserves the "naturalness" of images (i.e. no cartoon–like faces), iii) it is compatible with

---

[3]Throughout this appendix, the term "face location" is slightly abused for the sake of simplicity. This term is meant to encompass the case of people turning their head to their left or right—thereby appearing in a profile, or even turning their back to the camera, where "face location" should read "location of the head outline."

[4]The image area surrounding the face location.

existing decoders, and iv) its requirements in terms of model–fitting accuracy are reduced. In what follows, we concentrate on a specific type of video data—i.e. head–and–shoulder sequences, partial models—i.e. models of face locations, and fall–back video coders—3D subband based, with a global coding rate of 96 kbps for a luminance signal in CIF format. However, despite the specificity of this framework, the concept is quite general. It could be used in the contex of other video coders working at other rates, and the object tracking algorithms could also be redesigned for different applications where objects other than faces are of interest.

# 3   Using face location information for model–assisted video coding

In this section we describe the model adopted for the representation of face location information (Section 3.1), and the procedure used for manually determining face location in video sequences (Section 3.2). As mentioned in Section 1, manually derived location information can be used to both benchmark any automatic detection algorithm, as well as provide an upper bound to the effectiveness of our model–assisted approach in improving perceptual image quality. Finally, we discuss in detail the way this information is utilized in a subband–based video coding scheme (Section 3.3).

## 3.1   Face location modeling

The model we adopted in order to represent the location of a face was that of an ellipse. Although in actual face outlines the upper (hair) and lower (chin) areas can have quite different curvatures, an ellipse represents a reasonable trade–off between model accuracy and parametric simplicitly. Moreover, due to the fact that this information is not actually used to regenerate the face outline, a small lack in accuracy does not have any significant impact in the overall performance of the coding process. In order to accomodate various head positions and sizes, ellipses of arbitrary sizes and "tilt" are considered.

An arbitrary ellipse can be represented by the following quadratic, non–parametric equation (implicit form) [7]:

$$ax^2 + 2bxy + cy^2 + 2dx + 2ey + f = 0, \quad b^2 - ac < 0. \tag{1}$$

The negative value of the discriminant $D = b^2 - ac$ is a necessary condition, as other values are associated with different quadratic curves.

In order to facilitate the use of model–assisted motion compensation (discussed in Section 3.3.2), it is necessary to obtain the affine transformation $\tau$ which maps one ellipse to another. Points from the region inside the first ellipse will then be mapped to points inside the second one according to the equation:

$$\begin{bmatrix} x' \\ y' \\ 1 \end{bmatrix} = \tau \begin{bmatrix} x \\ y \\ 1 \end{bmatrix} \tag{2}$$

where $\tau$ is a $3 \times 3$ matrix of the form:

$$\tau = \begin{bmatrix} \tau_{11} & \tau_{12} & \tau_{13} \\ \tau_{21} & \tau_{22} & \tau_{23} \\ 0 & 0 & 1 \end{bmatrix} \tag{3}$$

This complex affine transformation can be obtained by composing simpler transformations corresponding to translation, rotation, and scaling. For an ellipse given by Equation (1), its center is given by:

$$\begin{bmatrix} x_0 \\ y_0 \end{bmatrix} = - \begin{bmatrix} a & b \\ b & c \end{bmatrix} \begin{bmatrix} d \\ e \end{bmatrix} \tag{4}$$

and its tilt angle is given by:

$$\theta = \frac{1}{2}\text{acot}\left(\frac{a - c}{2b}\right) \tag{5}$$

11

(see Figure 2). For an ellipse with zero tilt, centered at $(0,0)$, i.e. of the form:

$$ax^2 + cy^2 + f = 0, \quad ac > 0, \tag{6}$$

the sizes of its major and minor axes $A$ and $B$ are given by:

$$A = -f/a, \tag{7}$$

$$B = -f/c. \tag{8}$$

The ratio $r = A/B$ will be called the *aspect ratio* of the ellipse. From the above quantities, the composite transformation $S \circ R \circ T$ which maps an arbitrary ellipse to a unit circle centered at the origin is defined by:

$$T = \begin{bmatrix} 1 & 0 & -x_0 \\ 0 & 1 & -y_0 \\ 0 & 0 & 1 \end{bmatrix} \quad \text{(translation by } [-x_0, -y_0]), \tag{9}$$

$$R = \begin{bmatrix} \cos\theta & \sin\theta & 0 \\ -\sin\theta & \cos\theta & 0 \\ 0 & 0 & 1 \end{bmatrix} \quad \text{(rotation by } -\theta), \tag{10}$$

$$S = \begin{bmatrix} 1/A & 0 & 0 \\ 0 & 1/B & 0 \\ 0 & 0 & 1 \end{bmatrix} \quad \text{(scaling by } 1/A \text{ and } 1/B). \tag{11}$$

Note that although $R$ and $T$ can be directly obtained from the original ellipse parameters of Eq. (1), $S$ requires the calculation of new ellipse parameters—namely those of Eq. (6)—for the translated and rotated ellipse. This can be done by observing that the ellipse parameters are transformed by a linear mapping $M$ according to [7]:

$$\left[\begin{array}{ccc} a' & b' & d' \\ b' & c' & e' \\ d' & e' & f' \end{array}\right] = M^T \left[\begin{array}{ccc} a & b & d \\ b & c & e \\ d & e & f \end{array}\right] M \qquad (12)$$

Assuming now that we have two ellipses $\mathcal{E}_1$ and $\mathcal{E}_2$, with corresponding transformations $T_1$, $R_1$, $S_1$ and $T_2$, $R_2$, $S_2$, the transformation $\tau$ which maps $\mathcal{E}_1$ onto $\mathcal{E}_2$ is given by:

$$\tau = T_2^{-1} \circ R_2^{-1} \circ S_2^{-1} \circ S_1 \circ R_1 \circ T_1 \qquad (13)$$

This transformation will be used to generate a motion vector field in Section 3.3.2.

## 3.2 Manual tracing of face outlines

The manual process of detecting and locating objects consists of having a human operator design ellipses on original video frames, that track as closely as possible the face outline. This process inherently involves trial and error, and is best performed using appropriate interactive software. A special-purpose tool was developed for this task. In the following, we only briefly outline the ellipse design process; the details of the software are not described in this appendix.

The implicit form for an ellipse, given in Equation (1), is useful in many computational tasks. It is, however, unattractive for the purpose of interactively designing ellipses. In the context of computer graphics and computer aided design, parametric representations of curves are almost exclusively used due to the flexibility that they provide to end-users [7, 12]. Such a representation of arbitrary quadratic curves in which attractive design features are provided is a so-called rational quadratic Bezier form [7]:

$$\vec{P}(t) = \frac{(1-t)^2 w_0 \vec{P}_0 + 2(1-t)t w_1 \vec{P}_1 + t^2 w_2 \vec{P}_2}{(1-t)^2 w_0 + 2(1-t)t w_1 + t^2 w_2}, \qquad (14)$$

where $\{w_i\}_{i=0,1,2}$ are non-negative weighting factors, and $\{P_i\}_{i=0,1,2}$ are points on the plane defining the so-called *control polygon*. The intuitive effect of the weighting factors is to determine how heavily each point affects the shape of the curve.

The curve design procedure we developed is as follows. The user initially specifies three points on the plane: $P_0$, $P_2$, and $Q$ (see Figure 3). These points will be on the ellipse generated. The user then specifies a final fourth point $P_1$, which defines the intersection of the straight lines tangent to the ellipse at $P_0$ and $P_2$. Note that $Q$ must be inside the triangle defined by $P_0$, $P_1$, and $P_2$, and the placement choices for $P_1$ are therefore limited— the allowed region is shown in gray in Figure 3[5]. Since $P_0$ and $P_2$ are on the ellipse, $w_0$ and $w_2$ in (14) can be set to 1 without loss of generality. It can then be shown that in order for (14) to represent an ellipse, $w_1$ must be strictly smaller than one.

Given the abovementioned four points, one can compute the value of $w_1$ [7] and then transform equation (14) to the implicit form (1) by eliminating the parameter $t$ after some fairly tedious algebraic manipulation. The parameters of the implicit form are then made available to the encoder, to be used as described in the following section. In Figure 4 we show manually traced outlines of faces and other objects[6] in still frames from the video sequences "jelena" and "jim."

## 3.3 Model–assisted 3D subband–based video coding

The information about face location in successive frames of a head–and–shoulder video teleconferencing sequence can be utilized in two different components of a 3D subband–based video teleconferencing system, such as the one described in [21, 22]. Firstly, it can be used to devise a novel *model–assisted, pixel–based motion compensation* scheme in the spatiotemporal baseband which involves no transmission of motion vectors, and which is compatible with conditional replenishment. Secondly, it can be used to enable the dynamic bit allocator (DBA) of the encoder to selectively use two different quantizers $Q_i$ and $Q_e$—$Q_i$ being finer than $Q_e$—in the two areas of the subband signals delimited by an elliptical face outline. $Q_i$ is used in the interior region of the ellipse, whereas $Q_e$ is used in the exterior one.

---

[5] In practice. there are three such regions (one per each vertex of the original triangle) as the software can automatically infer the correct point configuration.

[6] Namely a book and a badge, whose location models are parallelograms which were simply specified by three corner points.

### 3.3.1  Low bit rate 3D subband–based coding of digital video with a dynamic bit allocation

We briefly review the structure of the 3D subband–based video teleconferencing system described in [21, 22], functioning at the rate of 128 kbps with the luminance signal encoded at 96 kbps. The input luminance signal in CIF format, consisting of images of size $360 \times 240$ pixels, temporally subsampled at 7.5 fps, is decomposed in a separable fashion into seventeen spatio–temporal subbands organized according to Figure 5. Sample pairs of subband frames for the sequences referred to as "jelena," "jim," and "mother–and–child," are shown in Figure 7.

Each pair of low–pass temporal (LPT), high–pass temporal (HPT) subband frames is allocated a fixed number of bits which is given by the global coding rate. These bits are dynamically allocated to the various subbands according to an *encoding priority list* shown in Figure 6.a). For any given pair of subband frames, the *dynamic bit allocator* (DBA) first orders the subband data blocks[7] which cannot be repeated from the previous pair in a list of blocks with decreasing mean–square energy. The dynamic bit allocator may run out of bits at any point in the list, as the signal content of the various subbands depends on the nature of the original input sequence (close–up, far–away shot, more than one person in scene, presence of textures, motion, etc.). Whenever the bit allocator runs out of bits within a subband cluster, the blocks with highest mean–square energy are coded; the remaining blocks with lowest mean–square energy are discarded. The "feedback loop" in Figure 6.a) indicates that in cases where bits are left over after the encoding of the cluster of subbands $\{S_2, S_3, S_4\}$, these bits can be used to encode more data in a particular cluster of subbands such as the "motion subbands" $\{S_{8.1}, S_{8.2}, S_{8.3}, S_{8.4}\}$, resulting in a bit allocation with two passes through the data.

The various quantizers used to code the subband data on a pixel or block basis are described in [22, 20]. The quantization strategy is recalled in Table 1. The use of *conditional replenishment* (CR) and zeroing of low–energy subband data blocks implies the generation of

---

[7]This is done for every subband except $S_{1.1}$ which is encoded in a pixel-based fashion. The blocks are of size $4 \times 4$.

side information which specifies for each pixel or block in a non–discarded subband whether it is: i) repeated from the same spatial location in the previous subband frame pair, ii) coded. or iii) zeroed–out. Figure 10 shows a template image for the storage of the side information arising from quantization.

### 3.3.2 Model–assisted pixel–based motion compensation

In [21, 22], the encoding of subband $S_{1.1}$ was performed on a pixel basis, with use of conditional replenishment in order to repeat still background from one subband to the next at a low bit rate. The pixels which could not be repeated were *replenished*, and quantized with 5–bit PCM. The coding algorithm is simply:

$$\hat{x}_t(i,j) = \begin{cases} \hat{x}_{t-1}(i,j) & \text{if } |x_t(i,j) - x_{t-1}(i,j)| \leq T_{cr} \\ Q\{x_t(i,j)\} & \text{otherwise} \end{cases} \tag{15}$$

where $x_t(i,j)$ denotes the value of the pixel $p_t(i,j)$ in the $i$-th row, $j$-th column in subband $S_{1.1}$ at instant $t$, $\hat{x}_t(i,j)$ is the quantized pixel value, and $Q\{\cdot\}$ denotes PCM quantization. The scalar threshold $T_{cr}$ threshold is empirically derived.

The availability of face location models for consecutive subband frames makes it possible to perform a type of pixel–based motion compensation which supplements—and is compatible with—the above scheme. In cases where the orientation of the person's head does not change too much from one pair of subband frames to the next, we may assume that the location of facial features can be traced back to the previous pair.

Let $C_{t-1}$ and $\overline{C_t}$ denote the ellipse contours which are good approximations of face locations in two consecutive subbands $S_{1.1}$. A two–dimensional affine mapping from one contour to the other is unambiguously[8] defined by mapping the major and minor axes of the ellipses onto one another. Let $\tau_t$ indicate this mapping from $C_t$ to $C_{t-1}$. The application of the mapping to each pixel inside the ellipse contour $C_t$, generates a pixel–based (affine) motion field which will in general outperform the simple conditional replenishment strategy described

---

[8]This only assumes that people in the scene do not either turn their backs to the camera. or appear upside down: frontal shots as well as profiles are allowed.

above, provided that the ellipses fit reasonably tightly and consistently to the actual face outlines. This idea is illustrated in Figure 8. The coding algorithm now becomes:

If $p_t(i,j)$ is inside $C_t$

- compute the motion vector $\underline{V}_t(i,j) = [\Delta i, \Delta j]^T$ for $p_t(i,j)$ from:

$$[\Delta i, \Delta j, 1]^T = (\tau_t - I)[i, j, 1]^T \tag{16}$$

where $I$ denotes the identity matrix,

- compute $\hat{x}_t(i,j)$ from:

$$\hat{x}_t(i,j) = \begin{cases} \hat{x}_{t-1}(i + \Delta i, j + \Delta j) & \text{if } |x_t(i,j) - x_{t-1}(i + \Delta i, j + \Delta j)| \leq T_{mc} \\ Q\{x_t(i,j)\} & \text{otherwise} \end{cases} \tag{17}$$

else

- compute $\hat{x}_t(i,j)$ as specified in (15)

The attractive feature of this scheme is that it does not require *transmission* of the motion field. Instead, the motion field is *recomputed* at the decoder based on the parameters of the affine transformations which map consecutive elliptical face location models onto one another (c.f. Section 3.1). Unfortunately, the bit savings resulting from using this scheme (as opposed to conditional replenishment) in the low–pass spatio–temporal subband $S_{1,1}$ was found to be fairly low—in the order of 5% of the bit rate required to code this subband. This is due to the fact that this particular motion field cannot efficiently capture either the (3D) motion of a person's head, nor the deformability of a person's facial features. The dynamic bit allocation described in the next section has a more significant impact.

### 3.3.3 Model–assisted dynamic bit allocation

The manually–obtained face location information was integrated to the dynamic bit allocation algorithm of the 3D subband–based video teleconferencing system described in [21, 22].

The new dynamic bit allocator, which we call *model–assisted* since it utilizes face location information, is based on a slightly different encoding priority list given in Figure 6.b), as well as on a modified quantization strategy, given in Table 2. In subbands $\{S_2, S_3, S_4\}$, two block quantizers are used, depending on whether a data block is inside or outside the face location appropriately scaled to these subbands. The finer of the two quantizers, denoted by $Q_i$, is used for *inside* the face location. By using a coarser quantizer $(Q_e)$ *outside* the face location—in the "diagonal subband" $S_4$, the blocks are simply zeroed–out—a saving of bits occurs. These bits can be used to encode perceptually important data blocks in the high–pass spatial subbands $\{S_5, S_6\}$, which previously had to be discarded altogether. Since the number of bits freed up is fairly small, and since the focus is on improving facial detail in coded sequences, only high–energy blocks that are inside the scaled face location in $\{S_5, S_6\}$ are coded. The "feedback loop" to the motion subbands takes effect after the encoding of this data. We call this type of dynamic bit allocation *model–assisted* to account for the fact that the bit allocator switches between two quantizers based on its knowledge of the location of a particular object in the subband data—in this particular case a person's face. A block diagram of the coding system with model-assisted DBA is shown in Figure 9.

How this model–assisted dynamic bit allocation functions is illustrated in Figure 11, where the side information images on the left were obtained from the scheme described in [21, 22], for the coding at the rate of 96 kbps of a CIF luminance signal, and where the images on the right were obtained from using the scheme described in this section[9]. In the images on the right, the two quantizers are indicated by two colors: *white* for the finer quantizer (4-level GVQ on $4 \times 4$ blocks), and *grey* for the coarser one (3–level GVQ on $4 \times 4$ blocks) in subbands $\{S_2, S_3, S_4\}$, *grey* for the finer quantizer (3–level GVQ on $4 \times 4$ blocks), and *black* for the coarser one (zeroing) in subbands $\{S_5, S_6\}$. Note that the side information required to transmit the parameters of the elliptical face location models, amounts to less than 0.5 kbps[10]—i.e. about 0.5 % of the total bit rate; a negligible amount.

---

[9]The difference between the images in the lower–right corners corresponding to the encoding of $S_{1\,1}$ is due to the use of model-assisted pixel-based motion compensation along with model-assisted DBA for the images on the right.

[10]This number assumes four bytes of data per floating point parameter.

The improvement in the rendition of facial detail in sequences coded with model–assisted dynamic bit allocation is illustrated in Figures 12. The coded images on the left were obtained from 3D subband coding at 96 kbps, as described in [21, 22]; the images on the right, coded at the exactly same rate, were obtained using model–assisted DBA. The eyelids, lips, face texture for "jelena" are all noticeably sharper in the images on the right. The eyes, spectacles, mouth, and beard for "jim" are also better reproduced in the images on the right. The data blocks in subbands $\{S_5, S_6\}$ which produce the improvement on these particular frames can be traced back to the side information images of Figure 11. These results are also noticeable in the coded video, albeit differently. In the two sequences "jelena" and "mother–and–child," the increased sharpness of facial features is fairly steady throughout the sequence. In "jim" however, the very high motion content of the sequence leaves few bits which can be used to improve facial details. Jim's face therefore only appears sharper as long as the motion is low—i.e. at the beginning of the sequence, from which the still of Figure 12 was extracted.

# 4 Automatic detection and tracking of face location

The detection of head outlines in still images has been the object of recent research in computer vision [13, 9, 17, 18]. In [15, 16], Gibbon *et al.* describe a system which detects outlines of people in image sequences, for electronic camera panning applications. To some extent, the task of detecting and tracking face locations in a sequence of images is facilitated by the temporal correlation from frame to frame. In this section, we describe a totally automatic low–complexity algorithm which was designed to perform the detection and tracking task in head–and–shoulder video sequences under minimal assumptions regarding sequence content. The algorithm belongs to a broad class of pattern–matching algorithms used for object detection [29, 6].

## 4.1 Detection and tracking algorithm

The algorithm detects and traces the outline of a face location geometrically modeled as an ellipse, using as (preprocessed) input data binary thresholded difference images obtained by subtracting consecutive low–pass spatio–temporal subbands $S_{1.1}$. Input images for the algorithm are therefore of size $45 \times 30$; typical input images are shown in the lower–right quarter of the images on the left side in Figure 11. Our face location detection algorithm was designed to locate both oval shapes (i.e. "filled") as well as oval contours partially occluded by data. The algorithm is organized in a hierarchical three step procedure: coarse scanning, fine scanning, and ellipse fitting. A final step consists of selecting the most likely among multiple candidates. This decomposition of the recognition and detection task in three steps, along with the small input image size[11] make the algorithm attractive for its low computational complexity; exhaustive searches of large pools of candidates were thereby avoided. The different steps are described below, and are illustrated in Figure 13.

**Step 1: Coarse Scanning**

The input signal—the binary edge image corresponding to subband $S_{1.1}$, is segmented into blocks of size $B \times B$ (typically $5 \times 5$). The block size is a tunable design parameter. Each block is marked if at least one of the pixels it contains is non–zero. The block array is then scanned in a left–to–right, top–to–bottom fashion, searching for contiguous runs of marked blocks. One such run is shown in the small circle, in Figure 13.a). For each such run, the following two steps are performed.

**Step 2: Fine Scanning**

Figure 13.b) shows the two circled blocks of the run of Figure 13.a), appropriately magnified. The algorithm scans the pixels contained in the blocks of a run, again in a left–to–right, top–to–bottom fashion. Here, however, the algorithm is not interested in contiguous runs of pixels, but rather in the first non–zero pixels found on each horizontal scan. The first

---

[11]This input data to the algorithm is readily available at the encoder in our 3D subband coding framework. This would not be the case with a full–band video coding system such as one based on the $p \times 64$ standard [24].

and last non–zero pixels, with coordinates $(X_{start}, Y)$, $(X_{end}, Y)$, define a *horizontal scanning region*.

The first two steps of the algorithm acted as a horizontal edge–merging filter. The size of the block directly relates to the maximum allowable distance between merged edges. It also has a direct effect on the speed of the algorithm, which is favored by large block sizes. The purpose of these two steps was to identify candidate positions for the top of the head. Due to the mechanics of human anatomy, head motion is performed under the limitations imposed by the neck joint. Consequently, and especially for sitting persons, the top of the head is usually subject to the fastest—and most reliably detectable—motion. At the end of the second step, the algorithm has identified a horizontal segment which potentially contains the top of the head.

**Step 3**: Ellipse Fitting/Data Reduction

In this third step, illustrated in Figure 13.c), the algorithm scans the line segment defined by $(X_{start}, Y)$, $(X_{end}, Y)$. At each point of the segment, ellipses of various sizes and aspect ratios are tried–out for fitness. If a good match is found, then the pixels which are included in the detected ellipse are zeroed–out. The algorithm then continues at the point where it left off in Step 1. A complete search among possible ellipses is performed, and the best match is selected. The search is performed for various major axis sizes, and for various aspect ratios. Only ellipses with "zero tilt" ($\theta = 0$) were considered here. The primary reason for imposing this restriction is that we could trade–off an extra degree of freedom (and hence algorithm simplicity) by extending the search range for the aspect ratio[12].

The fitness of any given ellipse to the data is determined by computing the normalized

---

[12]Typical face outlines have been found to have aspect ratios in the range of $(1.4, 1.6)$ [18]. Moreover, the face tilt has been found to be in the range $(-30°, +30°)$; a significant constraint due to the human anatomy. Within these ranges for $\theta$ and $r$, a tilted ellipse can be reasonably covered by a non–tilted one, albeit with a smaller aspect ratio (in the range $(1.0, 1.4)$). Although this approach will result in some bits being spent to code with high quality some of the non–facial area surrounding the head, a comparison of the results obtained with both manual and automatic detection shows that the differences are perceptually marginal.

average intensities $I_i$ and $I_e$ of the contour and border pixels respectively. The criterion has to be focused on the fringes of the face, since the interior region suffers from highly varying motion activity due to potentially moving lips and eyelids, or slight turns of the head. Although the contour of an ellipse is well–defined by its non–parametric form, the rasterization (spatial sampling) of image data necessitates the mapping of the continuous curve to actual image pixels. This is also true for the ellipse border. These discretized curves are defined as follows. Let $I_{\mathcal{E}(),)}$ be the index function for the set of points that are inside or on the ellipse $\mathcal{E}$. In other words,

$$
I_{\mathcal{E}}(i,j) = \begin{cases} 1 & \text{if } (i,j) \text{ is inside or on } \mathcal{E} \\ 0 & \text{otherwise} \end{cases} \tag{18}
$$

A pixel is classified as being on the ellipse contour if it is inside (or on) the ellipse, and at least one of the pixels in its $(2B+1) \times (2B+1)$ neighborhood is not, i.e.:

$$
(i,j) \in \mathcal{C}_i \iff I_{\mathcal{E}}(i,j) = 1 \ \text{ and } \ \sum_{k=i-B}^{i+B} \sum_{l=j-B}^{j+B} I_{\mathcal{E}}(k,l) < (2B+1)^2. \tag{19}
$$

Similarly, a pixel is classified as being on the ellipse border if it is outside the ellipse, and at least one of the pixels in its $(2B+1) \times (2B+1)$ neighborhood is either inside or on the ellipse, i.e.:

$$
(i,j) \in \mathcal{C}_e \iff I_{\mathcal{E}}(i,j) = 0 \ \text{ and } \ \sum_{k=i-B}^{i+B} \sum_{l=j-B}^{j+B} I_{\mathcal{E}}(k,l) > 0. \tag{20}
$$

The parameter $B$ defines the desired *thickness* of the ellipse contour and border, and is a tunable design parameter.

Given the above definition for the contour and border pixels, the normalized average intensities $I_e$ and $I_i$ can be defined as follows:

$$
I_i = \frac{1}{|\mathcal{C}_i|} \sum_{(m,n)\in\mathcal{C}_i} p(m,n), \tag{21}
$$

where $p(i,j)$ are the image data, and $|\mathcal{C}_i|$ is the cardinality of $\mathcal{C}_i$. Similarly, we have:

$$
I_e = \frac{1}{|\mathcal{C}_e|} \sum_{(m,n)\in\mathcal{C}_e} p(m,n). \tag{22}
$$

22

The normalization with respect to the "length" of the ellipse contour and border is necessary, in order to accomodate ellipses of different sizes.

With the above definitions, the best–fitting ellipse is considered be the one with the maximum model–fitting ratio:

$$R = \frac{1 + I_i}{1 + I_e}. \tag{23}$$

The above expression ranges from $1/2$ to 2, and favors small values of $I_e$ and large values of $I_i$; the higher the value of $R$, the better the fit of the candidate ellipse. In order to filter out false candidates, only ellipses which satisfy:

$$I_i > I_{i_{\min}} \text{ and } I_e < I_{e_{\max}}, \tag{24}$$

are considered. $I_{i_{\min}}$ and $I_{e_{\max}}$ are tunable design parameters. Their use is necessitated by the fact that $R$ is mostly sensitive to the relative values of $I_i$ and $I_e$, and much less to their absolute values.

This fitness criterion attempts to capitalize on specific properties observed on actual video data. In most cases, only an arc of the ellipse is clearly distinguishable, due to partial occlusion and to motion in the area surrounding the face (e.g. the shoulders). Using the above thresholds and the metric $R$, the algorithm is able to "lock on" to such arcs, and hence yield very good results even in cases of severely occluded faces.

Multiple Candidate Elimination

Finally, the above three–step procedure will in general yield more than one ellipse with a good fit, as is illustrated in Figure 14 for the sequence "jim."[13] If there is a need to select a *single* final one (e.g. when it is known that the sequence only includes one person), then

---

[13]In a case where no good fits are found, which occurs when the edge data is very sparse, the following strategy was adopted. If this case occurs at the very beginning of the video sequence to encode, the dynamic bit allocator waits till the face tracking algorithm locks on a face location, i.e. as soon as the person starts moving. If it occurs during the course of the sequence, meaning that the person stops moving altogether, the previously found face location is repeated; this latter case did not occur with any of the three sequences used in our experiments.

an elimination process has to be performed. This process uses two "confidence thresholds" $\Delta R_{min}$ and $\Delta I_e$. If the value of $R$ for the best-fitting ellipse is higher from the second best by more than $\Delta R_{min}$, then the first ellipse is selected. If not, then if the border intensity difference between the two ellipses is higher than $\Delta I_e$, the ellipse with the smallest $I_e$ is selected. If the border intensity difference is smaller than that (which rarely occurs in practice), then the original best candidate (the one with the maximum $R$) is selected.

## 4.2   Results

The output of sample test runs of the automatic face location detection algorithm is shown in Figures 14, and 15. Figure 14 shows an intermediate result, for the sequence "jim," consisting of the output of the algorithm before the multiple candidate elimination step. The ellipses found at that stage are "candidate" face locations[14]. Figure 15 shows four pairs of images. The images on the left show in white the binary edge data corresponding to subband $S_{1.1}$, with the best-fitting ellipse found by the automatic face location detection algorithm overlayed in grey. Note that these images are magnified by a factor eight in both the horizontal and vertical directions. The images on the right show the best fit magnified to the original image size of $360 \times 240$, and overlaid in grey onto originals.

The algorithm performs well, even in difficult situations such as partial occlusion of the face by a hand-held object. In the sequence "jim" for example, the sweeping motion of the magazine in front of jim's face does not "confuse" the algorithm[15]. In other words, the elliptical mask fits jim's facial outline better (in terms of the model-fitting ratio of (23)) than the parallelogram defined by the outline of the magazine—as it should, and even though the magazine severely occludes the face. In the case of more than one person in the scene, the algorithm tracks the location of the person's face for which the fit is best. For the sequence "mother-and-child," the mother's head is almost always detected—this can be explained by the combined facts that the child's face is at times partially occluded by the mother's left

---

[14]For these stills from "jim." the ellipses which remain after the (automatic) elimination procedure are shown in Figure 17.

[15]Of course, a hand-held oval object of roughly the same size as jim's face probably would.

hand, and that it partially blends in the scene background—except in one pair of frames for which the child's head is detected instead. This is illustrated in the lower–half of Figure 15. In any case, this "jump of focus" from one person in the scene to another can easily be eliminated by imposing a *continuity constraint* from one pair of frames to the next.

Figure 16 shows stills from sequences coded at 96 kbps. The images on the left were obtained without the model–assisted concept. Those on the right show the improvement in rendition of facial features when model–assisted dynamic bit allocation is used—this time with the face outline models provided by the automatic face location detection algorithm described in Section 4.1, and with the DBA described in Section 3.3.3. The percentage of bits transferred to the coding of data blocks in the facial area in the high–pass spatial subbands $\{S_5, S_6\}$ varies from frame to frame[16]. The analysis of the behavior of the coder for the three sequences "jelena," "jim," and "mother–and–child" shows that the bit transfer rate varies between 0 and 30% of the total coding rate of 96 kbps, with an overall average over the three sequences of about 10%; a small but nevertheless significant amount. In cases where no face contours are found, the coder falls back to its non–model–assisted mode. Figure 17 also shows stills from sequences coded at 96 kbps, both with a coder making use of model–assisted dynamic bit allocation. In this Figure however, two different amounts of bits were transferred to the facial area. The images on the left correspond to an average bit rate transfer of 10% of the total bit rate to the facial area; the ones on the right to a 15% transfer[17]. Note that as the transfer rate becomes high, the discrepancy in terms of image quality between facial and surrounding areas becomes very pronounced (c.f. jim's plaid shirt which becomes significantly blurred). A 10% average bit rate transfer achieves a good compromise between the two "extreme" situations of no transfer at all and a higher (15%) tranfer rate.

---

[16]The variation is a consequence of varying sequence content, especially in terms of motion. Bits can be devoted to the coding of subbands $\{S_5, S_6\}$ only when the motion content is not too high.

[17]This higher bit rate transfer was achieved by zeroing blocks in the areas surrounding face locations in subbands $\{S_{8.2}, S_{8.3}, S_{8.4}\}$. and $\{S_2, S_3\}$

## 4.3 Compatibility with $px64$ kbit/s video coding standards

The CCITT Recommendation H.261 [24, 11] describes an algorithm for video coding at the rates of $px64$, where $p = 1, 2, \cdots, 30$. The algorithm is a hybrid of Discrete Cosine Transform (DCT) and DPCM schemes, with block–based motion estimation and compensation. The DCT coefficients are quantized according to a quantization matrix $Q$ which specifies the various stepsizes of the linear quantizers. At the lowest rates of 128 and 64 kbps, coded pictures tend to suffer from blocky artifacts, especially when the amount of apparent motion in the sequence to encode is high. Most realizations of video coding systems based on Recommendation H.261 seem to aim at keeping a fairly "constant" coded picture quality. This, however, can only be done at the expense of the temporal sampling rate of the coded video—when the motion is moderate to high, temporal subsampling down to a frame rate as low as 2 fps is usually required. This in turn results in the disappearance of synchronization between coded video and audio, and in particular between lip movement and speech[18].

In the context of Recommendation H.261, face location information could be advantageously exploited in order to discriminatively encode facial and non–facial areas in head–and–shoulder video, according to either one of the following approaches:

- The first approach would be to impose a fairly high minimum coding frame rate (e.g. 7.5 fps), and use two distinct quantization matrices $Q^i$ and $Q^e$, for the facial and non–facial area respectively. The matrix $Q^e$ would correspond to significantly coarser quantization than $Q^i$, allowing for significant image "degradation" *outside* the facial area.

- The second approach would be for the coder to keep using a single quantization matrix $Q$ for both areas, and encode the facial area and non–facial areas at two different frame rates $FR^i$ and $FR^e$. The minimum frame rates for either location would be chosen so that:

$$FR^i_{min} > FR^e_{min}. \tag{25}$$

---

[18]It is generally assumed that the minimum frame rate required for lip–synch is about 7.5 fps.

where $FR^e_{min}$ could be as low as 2 fps, and $FR^i_{min}$ not lower than 5 fps, thereby preserving good audio–video synchronization where it is needed most, i.e. in the facial area.

Either approach could be used based on users' preference. They would ensure that a good rendition of facial features as well as acceptable lip–synch is preserved throughout coded sequences at 64/128 kbps, even when the high–spatial frequency and motion content in the sequence to encode are significant.

In this context described above of a full–band video coder, the input data to the automatic face location algorithm of Section 4.1 can be obtained at the encoder through a preprocessing stage consisting of the following cascade of operations:

1. Full–band input video frames of size $360 \times 240$ can be low–pass filtered with a separable filter with cut–off frequency at $\pi/8$, then decimated by a factor 8 in both horizontal and vertical dimensions, thereby producing low–pass spatial images of size $45 \times 30$.

2. These images can then go through an edge detector. The Sobel operator can be used to produce gradient magnitude images, which can then be tresholdeld to generate binary edge data suitable as input to the face location algorithm.

This preprocessing stage is illustrated on a single frame of the sequence "jim" in Figure 18.

# 5   Conclusion

In this appendix, we described a way to selectively encode different areas in head-and-shoulder video sequences typical of teleconferencing situations, thereby ensuring that facial features are sharp in image sequences coded at a low bit rate. The approach, referred to as model–assisted coding, relies on the automatic detection and tracking of face locations in video sequences. The face location information is used by a 3D subband–based low bit rate video coding system in two modules: a motion compensation module, and a model–assisted dynamic bit allocator which uses pairs of quantizers for the subband signals. In effect, the coder is assigned to transfer a small (10 percent on average) but nevertheless perceptually significant fraction of the available bit rate from the coding of the non–facial area (area surrounding the face location model) to that of the facial area, thereby providing images with sharper facial features. Even though a specific coding system is described, the concept is very general and could be used in the context of other video coders. The detection and tracking algorithm could also be tailored to different applications—i.e. to track any object with a simple geometric outline known *a priori* to be present in the scene.

# Tables

| Subbands | Quantization | Bit rate |
|---|---|---|
| $S_{1.1}$ | 5–bit pcm | 5 bpp |
| $S_{1.2}$, $S_{1.3}$, $S_{1.4}$ | 4–level GVQ | 2.5 bpp |
| $S_{8.1}$, $S_{8.2}$, $S_{8.3}$, $S_{8.4}$ | 3–level GVQ | 1.9 bpp |
| $S_2$, $S_3$, $S_4$ | 3–level GVQ | 1.9 bpp |
| $S_5$, $S_6$ | zeroing | 0 bpp |

Table 1: Quantization strategy for 3D subband coding with DBA at 96 kbps.

| Subbands | Quantization |
|---|---|
| $S_{1.1}$ | 5–bit PCM |
| $S_{1.2}$, $S_{1.3}$, $S_{1.4}$ | 4–level GVQ |
| $S_{8.1}$, $S_{8.2}$, $S_{8.3}$, $S_{8.4}$ | 3–level GVQ |
| $S_2$, $S_3$ | 4–level GVQ *inside* face location<br>3–level GVQ *outside* face location |
| $S_4$ | 4–level GVQ *inside* face location<br>zeroing *outside* face location |
| $S_5$, $S_6$ | 3–level GVQ *inside* face location<br>zeroing *outside* face location |

Table 2: Model–assisted quantization.

# Figures

Figure 1: A generic model-based video coding system.

Figure 2: Ellipse parameters.

Figure 3: Procedure for interactive design of ellipses.

Figure 4: Manually traced outlines of faces and other objects in frames from sequences "jelena" and "jim."

| | | |
|---|---|---|
| 7 | 5 | |

| | | |
|---|---|---|
| | 4 | 2 |
| 6 | 3 | 1.4 / 1.2 |
| | | 1.3 / 1.1 |

**LPT**

| | | |
|---|---|---|
| 11 | 9 | |

| | | |
|---|---|---|
| | 8.4 | 8.2 |
| 10 | 8.3 | 8.1 |

**HPT**

Figure 5: 3D subband decomposition of a video signal (17–subband scheme for 128 kbps coding). Left: Low-pass temporal subsequence. Right: High-pass temporal subsequence.

$$S_{1.1}$$
$$\downarrow$$
$$S_{1.2}, S_{1.3}, S_{1.4}$$
$$\downarrow$$
$$S_{8.1}, S_{8.2}, S_{8.3}, S_{8.4}$$
$$\downarrow$$
$$\overline{S_2}, S_3, S_4$$

6.a)

$$S_{1.1}$$
$$\downarrow$$
$$S_{1.2}, S_{1.3}, S_{1.4}$$
$$\downarrow$$
$$S_{8.1}, S_{8.2}, S_{8.3}, S_{8.4}$$
$$\downarrow$$
$$S_2, S_3, S_4$$
$$\downarrow$$
$$S_5, S_6$$

6.b)

Figure 6: Encoding priority lists. Left: No model-assisted DBA. Right: With model-assisted DBA.

33

Figure 7: Pairs of subband frames for sequences "jelena," "jim," and "mother-and-child."

Motion Vector $\underline{V}_t(i,j) = (\Delta i, \Delta j)$

Figure 8: Pixel-based motion compensation within elliptical face outlines.

Figure 9: 3D subband-based video coder with model-assisted dynamic bit allocation.

Figure 10: Template image for side information arising from subband quantization. The side information is binary for $S_{1.1}$, $S_{8.1}$, $S_{8.2}$, $S_{8.3}$, $S_{8.4}$, ternary for $S_{1.2}$, $S_{1.3}$, $S_{1.4}$, $S_2$, $S_3$, pixel–based for $S_{1.1}$, and block–based for the other subbands. Pixels which are quantized will appear in white in the lower–right quarter image. Blocks which are quantized will appear in white or grey (depending on quantizer used) in the upper–left (LPT) and upper–right (HPT) quarter images. Blocks which are zeroed–out will appear in white in the lower–left quarter image.

Figure 11: Side information for a pair of subbands arising in the encoding at 96 kbps of the video sequences "jelena" (upper images), and "jim" (lower images). Left: without model-assisted DBA. Right: with model-assisted DBA.

Figure 12: Stills from sequences "jelena" and "jim" coded with 3D SBC at 96 kbps respectively without (left) and with (right) model-assisted DBA. Face locations models in white obtained manually.

(a) Step 1: Coarse Scanning         (b) Step 2: Fine Scanning

$x_{start}$         $x_{end}$

(c) Step 3: Ellipse Fitting/Data Reduction

$\Delta x = 1$

$x_{start}$         $x_{end}$

$\Delta y = 0.5$

$r = 1.1, 1.35, 1.6$

Figure 13: Algorithm for automatic face detection and tracking in video sequences.

40

Figure 14: Automatically detected candidate face locations in sequence "jim" before multiple candidate elimination.

Figure 15: Automatically detected face locations in sequences "jelena," "jim," and "mother-and-child."

Figure 16: Stills from sequences "jelena," "jim," and "mother and child" coded with 3D SBC at 96 kbps respectively without (left) and with (right) model-assisted DBA. Face locations models in white obtained by automatic detection and tracking.

43

Figure 17: Stills from sequence "jim" coded with 3D SBC at 96 kbps with model-assisted DBA with different amounts of bit rate transfer to facial area. The average bit rate transfer is 10% and 15% of the total bit rate for the stills on the left and right respectively.

EP 0 684 736 A2

Figure 18: Edge extraction for the generation of binary input data in a full-band video coding framework. Upper-left: Low-pass filtered and downsampled image. Upper-right: Gradient magnitude image for the Sobel operator. Lower-left: Thresholded magnitude image. Lower-right: Thresholded magnitude image with overlayed face contour obtained from automatic face location detection algorithm.

## Claims

1. A method of coding a video signal, the video signal comprising a succession of frames, at least one of said frames comprising an image including a predetermined object having a shape, the method comprising the steps of:

    automatically determining a region of the image which contains at least a portion of the predetermined object by comparing one or more predetermined shapes with the shape of the predetermined object in the image; and

    coding the determined region.

2. The method of claim 1 wherein the determined region is coded with a first coder, the method further comprising the step of coding a portion of the image not in the determined region with a second coder, wherein the second coder is not identical to the first coder.

3. The method of claim 1 wherein the predetermined object comprises a person's head and wherein each of the one or more predetermined shapes comprises an ellipse.

4. A method of determining a motion vector for use in coding a video signal with a motion-compensated coding method, the video signal comprising a succession of frames, a first one of said frames comprising a first image including a predetermined object, the predetermined object having a first shape in the first image, a second one of said frames comprising a second image including the predetermined object, the predetermined object having a second shape in the second image, the method comprising the steps of:

    automatically determining a first region of the first image which contains at least a portion of the predetermined object by comparing one or more predetermined shapes with the first shape of the

45

predetermined object in the first image;

automatically determining a second region of the second image which contains at least a portion of the predetermined object by comparing one or more predetermined shapes with the second shape of the predetermined object in the second image; and

comparing a location included in the first region of the first image with a location included in the second region of the second image to determine the motion vector.

5. The method of claim 4 wherein the predetermined object comprises a person's head and wherein each of the one or more predetermined shapes comprises an ellipse.

6. An apparatus for coding a video signal, the video signal comprising a succession of frames, at least one of said frames comprising an image including a predetermined object having a shape, the apparatus comprising:

means for automatically determining a region of the image which contains at least a portion of the predetermined object by comparing one or more predetermined shapes with the shape of the predetermined object in the image; and

means for coding the determined region.

7. The apparatus of claim 6 wherein the means for coding the determined region comprises a first coder, the apparatus further comprising a second coder for coding a portion of the image not in the determined region, wherein the second coder is not identical to the first coder.

8. The apparatus of claim 6 wherein the predetermined object comprises a person's head and wherein each of the one or more predetermined shapes comprises an ellipse.

9. An apparatus for determining a motion vector for use in coding a video signal with a motion-compensated coding method, the video signal comprising a succession of frames, a first one of said frames comprising a first image including a predetermined object, the predetermined object having a first shape in the first image, a second one of said frames comprising a second image including the predetermined object, the predetermined object having a second shape in the second image, the apparatus comprising:

means for automatically determining a first region of the first image which contains at least a portion of the predetermined object by comparing one or more predetermined shapes with the first shape of the predetermined object in the first image;

means for automatically determining a second region of the second image which contains at least a portion of the predetermined object by comparing one or more predetermined shapes with the second shape of the predetermined object in the second image; and

means for comparing a location included in the first region of the first image with a location included in the second region of the second image to determine the motion vector.

10. The apparatus of claim 9 wherein the predetermined object comprises a person's head and wherein each of the one or more predetermined shapes comprises an ellipse.

## FIG. 1

MODEL-ASSISTED QUANTIZER

## FIG. 2

MOTION VECTOR $\underline{V}_t(i,j) = (\Delta i, \Delta j)$